(19) Europäisches Patentamt
European Patent Office
Office européen des brevets

(11) Publication number: 0 162 243
A1

(12) **EUROPEAN PATENT APPLICATION**

(21) Application number: 85103914.9

(22) Date of filing: 01.04.85

(51) Int. Cl.[4]: C 08 G 63/62
C 08 L 69/00, C 08 K 5/42

(30) Priority: 11.04.84 US 599018

(43) Date of publication of application:
27.11.85 Bulletin 85/48

(84) Designated Contracting States:
DE FR GB IT NL

(71) Applicant: GENERAL ELECTRIC COMPANY
1 River Road
Schenectady New York 12305(US)

(72) Inventor: Tyrell, John Alfred
R.D. 2, Box 76D
Mt. Vernon Indiana 47620(US)

(72) Inventor: Freimiller, Gary Lee
313 Washington Drive
Mt. Vernon Indiana 47620(US)

(74) Representative: Catherine, Alain
General Electric - Deutschland Munich Patent Operations
Frauenstrasse 32
D-8000 München 5(DE)

(54) **Flame retardant polycarbonates.**

(57) A flame retardant polycarbonate composition, comprising in admixture:

A beta-alkenyl substituted aromatic polycarbonate resin, said beta-alkenyl substituent being present in an amount sufficient to improve the flame retardant properties of said aromatic polycarbonate resin, and an effective amount of a flame retardant additive.

EP 0 162 243 A1

# FLAME RETARDANT POLYCARBONATES

## FIELD OF THE INVENTION

The invention is directed to flame retardant polycarbonates, and in particular to aromatic polycarbonates prepared from alkenyl substituted aromatic hydroxy compounds.

## BACKGROUND OF THE INVENTION

With the increasing public concern for safety, there is a clear need to provide safe materials for commercial and residential use. One particular area of that need is to provide flame resistant or flame retardant polymer products. As a result of this demand, many products are required to meet specified flame retardant criteria by both local and federal governments, and the manufacturers of such products. A well known test for flammability of plastic materials is set forth in Underwriter's Laboratories, standard UL-94, third edition (1980). This standard sets forth tests by which polymer materials are rated for self-extinguishing characteristics.

In the prior art, there are many known flame retardant additives which are employed by mixing with a base material to render such material self-extinguishing or flame retardant. Such flame retardant additives have been known to be employed in amounts from about 0.2 to 20 weight percent in order to be effective in extinguishing burning of base materials which are combustible. It has also been found that such amounts can have a degrading effect upon the base material to be rendered flame retardant, resulting in the loss of valuable physical properties of the base material. For example, thermal stability, color and corrosion problems are often associated with flame retardant additives of the prior art. The loss of valuable physical

properties when employing known flame retardant additives is particularly acute when polycarbonate resins are the base material.

## SUMMARY OF THE INVENTION

The present invention relates to a class of polycarbonates having improved flame retardant properties. Particularly it relates to polycarbonates incorporating olefinic groups, having improved flame retardant properties. The polycarbonates of the invention are characterized by superior physical properties, compared to the prior flame retardant compositions described above.

Generally, the polycarbonates of the invention are prepared from aromatic dihydroxy compounds with up to two benzene nuclei, each of which may contain an alkenyl radical as a side chain. The alkenyl radicals of these aromatic dihydroxy compounds should be present in the polycarbonates of the invention in amounts sufficient to improve the flame retardant properties of the base polycarbonates, as measured by Underwriter's Laboratories standard UL-94.

## DETAILED DESCRIPTION OF THE INVENTION

The present invention provides polycarbonates incorporating unsaturation to improve flame retardant properties. These polycarbonates are prepared from aromatic dihydroxy compounds (dihydric phenols) with up to two benzene nuclei, at least one of which contains an alkenyl substituent. Suitable alkenyl substituents include beta-alkenyl radicals, which may be substituted with a lower alkyl of 1 to 3 carbon atoms. That is, the beta-alkenyl groups which form side chains on the aromatic nuclei of the dihydric phenols may be the allyl radical ($CH_2=CH-CH_2$) and derivatives thereof, such as 1-methylallyl ($CH_2=CH-CH(CH_3)-$), 1-ethylallyl ($CH_2=CH-CH(C_2H_5)-$), 1-propylallyl ($CH_2=CH-CH(C_3H_7)-$), 2-methylallyl ($CH_2=C(CH_3)-CH_2-$), 2-ethylallyl ($CH_2=C$

$(C_2H_5)-CH_2-)$, 2-propylallyl $(CH_2=C(C_3H_7)-CH_2-)$, and 2-butenyl $(CH_3-CH=CH-CH_2-)$, and the like. At least one of these beta-alkenyl radicals is attached to the aromatic dihydroxy compound used to prepare the polycarbonates of the present invention.

The beta-alkenyl substituted dihydroxy diphenyl alkanes which may be used as starting materials for producing the new polycarbonates of the present invention may be obtained, for example, by condensing the corresponding mono-beta-alkenyl substituted aromatic mono-hydroxy compounds or mixtures thereof with unsubstituted aromatic mono-hydroxy compounds with aldehydes or ketones as described by Schnell, Chemistry and Physics of Polycarbonates, pages 64-65 (Interscience 1964). The polycarbonates of the present invention may alternately be prepared by the Claisen rearrangement of the mono- or di-beta-alkenyl ethers of the corresponding aromatic dihydroxy compounds, or of mono- or di-beta-alkenyl substituted compounds, or by nuclear alkenylization of the corresponding aromatic dihydroxy compound with an alkenyl halogenide.

Typical alkenyl substituted dihydric phenol compounds which may be used to prepare polycarbonates of the present invention include:

3,3'-diallyl-4,4'-dihydroxyidphenyl-2,2-propane;

3,3'-di-(1-methyl allyl)-4,4'-dihydroxydiphenyl-2,2-propane;

3,3'-di-(2-methyl allyl)-4,4'-dihydroxydiphenyl-2,2-propane;

3,3'-di-(1-ethyl allyl)-4,4'-dihydroxydiphenyl-2,2-propane;

3,3'-di-(3-propyl allyl)-4,4'-dihydroxydiphenyl-2,2-propane.

The polycarbonate resins of the present invention may be prepared by reacting a dihydric phenol as described above with a carbonate precursor such as phosgene, a haloformate, or a carbonate ester. The carbonate precursor may be either a carbonyl halide, a carbonate ester, or a haloformate. The carbonyl halides that can be employed herein are carbonyl bromide, carbonyl chloride, and mixtures thereof. Typical of the carbonyl esters which may be employed herein, are diphenyl carbonate, di-(halophenyl) carbonates such as di-(chlorophenyl) carbonate, di-(bromophenyl) carbonate, di-(trichlorophenyl) carbonate, di-(tribromophenyl) carbonate, di-(alkyl phenyl) carbonate, di-(tolyl) carbonate, di-(naphthyl), di-(chloronaphthyl) carbonate, phenyl tolyl carbonate, chlorophenyl-chloronaphthyl-carbonate, or mixtures thereof. The haloformates suitable for use herein includes bishaloformates of glycols such as bishaloformates of ethylene glycol, neopentyl glycol, polyethylene glycol, etc. While other carbonate precursors will also be apparent to those in the art, carbonyl chloride, also known as phosgene, is preferred.

The aromatic carbonate polymers of the invention are prepared by employing a molecular weight regulator, an acid acceptor, and a catalyst. The molecular weight regulator which may be employed in carrying out the process of the invention includes phenol, cyclohexanol, methanol, paratertiarybutylphenol, parabromophenol, etc. Preferably, phenol is employed as the molecular weight regulator.

A suitable acid acceptor may be either an organic or inorganic acid acceptor. Suitable organic acid acceptors are, for example, tertiary amines including pyridine, triethylamine, dimethylaniline, tributylamine and the like. Suitable inorganic acceptors may, for example, be hydroxide, carbonate, bi carbonate, phosphate, or an alkali or alkaline earth metal.

0162243

The catalysts which are employed herein can be any of the suitable catalysts that aid the polymerization of dihydric phenols with phosgene. Suitable catalysts include tertiary amines, such as, for example, triethyl amines, tripropyl amine, N,N-di-methylaniline, quaternary amine compounds such as tetraethylammonium bromide, cetyl triethyl ammonium bromide, tetra-n-heptyl ammonium iodide, tetra-n-propyl bromide, tetra-methylammonium, tetra-methylammonium hydroxide, tetra-n-butyl ammonium iodide, benzyl trimethyl ammonium chloride, and quaternary phosphonium compounds such as, for example, n-butyltriphenyl phosphonium bromide and methyltriphenyl phosphonium bromide.

Generally speaking, the polycarbonate resins of the present invention may be characterized as possessing recurrent structural units of the formulae:

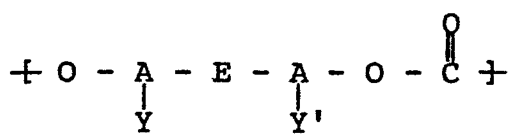

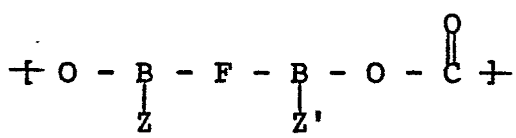

in which A and B each are an aromatic group such as phenylene, bisphenylene, naphthylene, anthrylene, etc. E and F may each be an alkylene or alkylidene group such as methylene, ethylene, propylene, propylidene, isopropylidene, butylene, butylidene, isobutylidene, amylene, isoamylene, amylidene, isoamylidine, etc. Where E or F is an alkylene or alkylidene group, it may also consist of two or more alkylene or alkylidene groups, connected by a non-alkylene or non-alkylidene group such as an aromatic linkage, a tertiary amino linkage, an ether linkage, a carbonyl linkage, a silicon containing linkage, or by a sulfur containing linkage such as sulfide, sulfoxide, sulfone, etc. In addition, E or F may be a cycloaliphatic group (e.g. cyclopentyl, cyclohexyl), cycloalkylidene (e.g. cyclohexylidene), a sulfur containing linkage, such as sulfide, sulfoxide or sulfone; an ether linkage; a carbonyl group; a tertiary nitrogen group; or a silicon containing linkage such as silane or siloxy. Other groups which E or F may represent will occur to those skilled in the art. Y and Y' are the same or different and may be hydrogen or an organic group such as an alkylene or alkyl. Z and Z' may each be an unsaturated hydrocarbon and are unaffected by the reactants and the reaction conditions. Z and/or Z' preferably are beta-alkylene of 3 to 12 carbon atoms, either straight, branched or cyclic. Preferably, A is phenylene. Preferably E and F each are isopropylidene or sulfone. Preferably Y and Y' are hydrogen. Preferably Z and Z' each are beta-alkylene of 3 to 5 carbons, straight or branched. Most preferably Z and Z' each are a linear beta-alkylene of 3 carbons.

The polycarbonates of the present invention preferably contain between about 0.5 percent and about 30 percent by weight unsaturated substituents (viz. Z and/or Z').

The polycarbonates of the present invention incorporate at least one flame retardant salt such as a metal salt of either a monomeric or polymeric aromatic sulfonate, perfluoroaliphatic sulfonate, or mixtures thereof. The metal salt may be either an alkali metal or an alkaline earth metal salt, or mixtures of metal salts. The amount of sulfonate metal salts may vary from about 0.05 to 10 percent by weight based on weight of the aromatic polycarbonate. Suitable aromatic sulfonesulfonate metal salts are described in U.S. Patent 3,948,841, incorporated herein by reference. The

preferred metal salt of an aromatic sulfonesulfonate is potassium diphenylsulfonesulfonate. The amount of the aromatic sulfonate salt may vary from about 0.05 to 10 percent by weight, based on the weight of the aromatic polycarbonate. These aromatic sulfonate metal salts are described in U.S. Patent 3,933,734, incorporated herein by reference. The preferred aromatic sulfonate salt is sodium trichlorobenzene sulfonate.

DESCRIPTION OF THE PREFERRED EMBODIMENTS

In order that those skilled in the art may better understand how the present invention may be practiced, the following examples are given by way of illustration and not by way of limitation. All parts and percentages are by weight unless otherwise noted.

EXAMPLE I

A reactor was charged with 6 liters water, 7 liters methylene chloride, 2,000 grams bisphenol A, 250 grams 3,3'-diallyl-4,4'-dihydroxy-diphenyl-2,2' propane, 32 grams phenol, $14_{cc}$ triethylamine, and 3.4 grams sodium gluconate. The reaction mixture was stirred, pH adjusted to about pH 10-11 with aqueous-sodium hydroxide solution, and phosgene was added for 30 minutes. The phosgene was added at a rate of 40 grams per minute, while maintaining pH at about 10-11 with sodium hydroxide solution. After the reaction was completed, the layers were separated. The organic layer was washed with dilute hydrochloric acid and twice with distilled water. The solvent was removed by steam precipitation to give the copolymer as a white powder having an intrinsic viscosity of about 0.51 as determined in a methylene chloride solution at 25°C.

EXAMPLE II

The copolymer of Example I was blended with about 0.25 parts per 100 of flame retardant salt, viz. potassium diphenyl sulfonesulfonate. The blend was extruded

and molded into bars measuring 63.5 mm by 12.7 mm by 1.6 mm (2.5" x 1/2" x 1/16"). The bars were tested for flammability as described in Underwriters Laboratory standard 94. Four bars had no drips, and achieved a 94 V-1 rating. One bar had one drip in the second ignition, and achieved a 94 V-2 rating. The flame retardant copolymer was also tested for impact resistance, and achieved a notched Izod impact strength for a 3.2 mm sample of 94 kgf.cm/cm (17.3 ft.lb/in). The break was 100 percent ductile. The heat distortion temperature under load (DTUL) of the test sample was determined according to modified ASTM D-648 test method, and found to be 128°C.

COMPARATIVE EXAMPLE I

Example II described a polycarbonate according to the present invention. To compare the results set forth in Example II, a bisphenol-A polycarbonate homopolymer was prepared, having an intrinsic viscosity of 5.0 dl/g as determined in a methylene chloride solution at 25°C. This polycarbonate homopolymer was blended with 0.25 parts per hundred potassium diphenylsulfonesulfonate, as described in Example II. The blend was extruded and molded, as described in Example II. Each of the test bars dripped for a UL rating of 94 V-2. The notched Izod impact strength for a 3.2 mm sample was 87 kgf.cm/cm (16.0 ft.lb/in), and the break was 100 percent ductile. The heat distortion under load (DTUL) was 134°C.

EXAMPLE III

A reactor was charged with 6 liters water, 7 liters methylene chloride, 2,100 gms bisphenol-A, 200 gms 3,3'-diallyl-4,4'-dihydroxy-diphenyl sulfone, 42 gms phenol and 14 cc triethylamine. The reaction mixture was stirred, and the pH adjusted to about 9-10 with

aqueous sodium hydroxide solution. Phosgene was added for 30 minutes at a rate of 40 grams per minute, while maintaining the pH at 9-11 with aqueous sodium hydroxide solution. After the reaction was completed, the layers were separated and the organic layer washed with dilute hydrochloric acid, and twice with distilled water. The solvent was removed by steam precipitation to give the copolymer as a white powder of 0.65 intrinsic viscosity as determined in methylene chloride at 25°C.

EXAMPLE IV

The copolymer prepared in Example IV was blended with 0.5 parts per 100 of sodium trichlorobenzene sulfonate, and molded into test bars measuring 63.5 mm by 12.7 mm by 1.6 mm. Five bars were tested according to Underwriters Laboratory standard 94. None of the test bars dripped, for a rating of 94 V-0.

COMPARATIVE EXAMPLE II

The copolymer of Example V is a polycarbonate according to the present invention. In order to compare the polycarbonate of the present invention, a bisphenol-A polycarbonate homopolymer was prepared, having an intrinsic viscosity of 5.0 as measured in methylene chloride at 25°C. The homopolymer was blended with 0.25 parts per 100 of sodium trichlorobenzenesulfonate, as described in Example V. After molding and testing as described in Example V, each of the test bars dripped for a rating of 94 V-2.

The examples demonstrate that polycarbonates of the present invention have improved flame retardant properties, and maintain the valuable physical properties of the polycarbonate base material.

It is understood that various other modifications will be apparent to and can readily be made by those skilled in the art without departing from the scope and

spirit of this invention. Accordingly, it is not intended that the scope of the claims appended hereto be limited to the description as set forth herein, but rather that the claims be construed as encompassing all the features of patentable novelty.

WHAT IS CLAIMED IS:

1. A flame retardant polycarbonate composition, comprising in admixture:

a beta-alkenyl substituted aromatic polycarbonate resin, said beta-alkenyl substituent being present in an amount sufficient to improve the flame retardant properties of said aromatic polycarbonate resin, and

an effective amount of a flame retardant additive.

2. The flame retardant polycarbonate composition set forth in claim 1, wherein said flame retardant additive is present in an amount from about 0.05 to about 10 percent by weight based on the weight of the aromatic polycarbonate.

3. The flame retardant polycarbonate composition set forth in claim 2, wherein said flame retardant additive comprises at least one metal salt of an aromatic sulfonate.

4. The flame retardant polycarbonate composition set forth in claim 2, wherein said flame retardant additive comprises at least one metal salt of an aromatic sulfonesulfonate.

5. The flame retardant polycarbonate composition set forth in claim 3, wherein said metal salt is an alkali metal salt, selected from the group consisting of lithium, sodium and potassium salts.

6. The flame retardant polycarbonate composition set forth in claim 4, wherein said metal salt is an alkali metal salt, selected from the group consisting of lithium, sodium and potassium salts.

7. The flame retardant polycarbonate composition set forth in claim 1, wherein said beta-alkenyl substituted aromatic polycarbonate is prepared from 3,3'-diallyl-4,4'-dihydroxydiphenyl-2,2-propane.

8. The flame retardant polycarbonate composition set forth in claim 1, wherein said beta-alkenyl substituted aromatic polycarbonate is prepared from 3,3-di-(1-methyl allyl)-4,4'-dihydroxydiphenyl-2,2-propane).

9. The flame retardant polycarbonate composition set forth in claim 1, wherein said beta-alkenyl substituted aromatic polycarbonate is prepared from 3,3'-di-(2-methyl allyl)-4,4'-dihydroxydiphenyl-2,2- propane.

10. The flame retardant polycarbonate composition set forth in claim 1, wherein said beta-alkenyl substituted aromatic polycarbonate is prepared from 3,3'-di-(1-ethyl allyl)-4,4'-dihydroxydiphenyl-2,2- propane.

11. The flame retardant polycarbonate composition set forth in claim 1, wherein said beta-alkenyl substituted aromatic polycarbonate is prepared from 3,3'-di-(3-propyl allyl)-4,4'-dihydroxydiphenyl-2,2- propane.

European Patent Office

# EUROPEAN SEARCH REPORT

0162243 Application number

EP 85 10 3914

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | FR-A-1 413 300 (BAYER) * Abstract; page 2, left-hand column, lines 29-60; right-hand column, lines 1-8 * --- | 1-8 | C 08 G 63/62<br>C 08 L 69/00<br>C 08 K 5/42 |
| D,Y | FR-A-2 256 217 (GENERAL ELECTRIC) * Claims 1-10 * --- | 1-8 | |
| A | FR-A-1 221 519 (N.V. DE BATAAFSCHE PETROLEUM MAATSCHAPPIJ) * Abstract A,B; page 1, right-hand column, line 18 * ----- | 1-9 | |
| | | | TECHNICAL FIELDS SEARCHED (Int. Cl.4) |
| | | | C 08 G |

The present search report has been drawn up for all claims

| Place of search | Date of completion of the search | Examiner |
|---|---|---|
| THE HAGUE | 12-07-1985 | DECOCKER L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document